# EUROPÄISCHE PATENTSCHRIFT

(11) **EP 1 082 371 B1**
(45) Veröffentlichungstag und Bekanntmachung des Hinweises auf die Patenterteilung: **03.04.2002**
(21) Anmeldenummer: 99967021.9
(22) Anmeldetag: 30.12.1999
(51) Int. Cl.: C08G 8/04

(54) **VERFAHREN ZUR HERSTELLUNG VON RESOLEN**
METHOD FOR PRODUCING RESOLS
PROCEDE DE PREPARATION DE RESOLS

(30) Priorität: 29.01.1999 DE 19903487
(43) Veröffentlichungstag der Anmeldung: 14.03.2001
(73) Patentinhaber: Bakelite AG, 58642 Iserlohn-Letmathe (DE)
(72) Erfinder: ROLL, Willi, D-48341 Altenberge (DE); BÖTTCHER, Axel, D-46487 Wesel (DE); NAPP, Walter, D-47137 Duisburg (DE); FRICKE, Peter, D-47627 Kevelaer (DE)
(86) Internationale Anmeldenummer: EP9910477
(87) Internationale Veröffentlichungsnummer: WO0044802

(56) Entgegenhaltungen:
- EP-A- 0 890 613
- US-A- 5 708 121

## Beschreibung

Die Erfindung betrifft die Herstellung von mit Hilfe von solchen Metall-Salzen hergestellten Phenolharzen, die die Bildung von Resolen katalysieren und deren Kationen in technischen Verfahren leicht als schwerlösliche Salze ausgefällt werden können.
Derartige Resole werden für verschiedene Anwendungsgebiete aus Gründen der besseren Feuchtigkeitsbeständigkeit bevorzugt.
Beispiele für derartige basische Salze sind basische Erdalkalisalze, insbesondere Calciumhydroxid. Diese Salze haben gegenüber den üblicherweise eingesetzten Alkalihydroxiden den Vorteil, daß die so hergestellten Harze einen sehr niedrigen Gehalt an freiem Phenol haben und daß die aus diesen Harzen hergestellten Produkte eine bessere Feuchtigkeitsbeständigkeit haben. Die Salze können nach der Kondensation durch Zusatz von verdünnter Schwefelsäure, von Kohlendioxid, Ammoniumsulfat, Ammoniumphosphaten oder Ammoniumcarbonaten aus der wäßrigen Lösung ausgefällt und abgetrennt werden können. Dabei werden Harze erhalten, die nahezu aschefrei sind.

Es ist ein Nachteil dieser Harze, daß die bei ihrer Herstellung anfallenden unlöslichen Niederschläge in einem aufwendigen Prozeß abfiltriert werden müssen, da andernfalls bei der Verarbeitung der Harze durch Versprühen Verstopfungen der Düsen auftreten und so zu Störungen im Verarbeitungsprozeß führen.
Die Filtration der Harze ist einerseits aufwendig und andererseits mit einem erheblichen Verlust an Harzen verbunden. Außerdem ist die Deponierung von phenolharzhaltigen Filterkuchen teuer und stellt ein Umweltproblem dar.

Eine Lösung dieser Probleme sind Phenolharze, bei denen Calciumionen mit Hilfe von Ammoniak oder Aminen komplex an das Harz gebunden sind, wie sie aus EP-A 0 198 130 und EP-A 0 190 468 bekannt sind. Diese Komplexe sind aber nur mäßig beständig. Innerhalb weniger Stunden bilden sich in entsprechenden Harzlösung doch Niederschläge, so daß diese Harze nur eingesetzt werden können, wenn sie direkt nach der Komplexierung weiterverarbeitet werden. Dies ist in der Regel nicht der Fall, weil der Harzhersteller nicht der Verarbeiter ist.
Außerdem zeigte sich, daß im technischen Calciumhydroxid enthaltenes Calciumcarbonat ebenfalls bei der Verarbeitung dieser Harze stört und weitere Ausfällungen begünstigt.

Es ist daher Aufgabe der Erfindung, Resole bereitzustellen, die einfach herzustellen sind und die zu Produkten mit guter Feuchtigkeitsbeständigkeit führen. Es ist ferner Aufgabe der Erfindung, daß diese Resole bei der Neutralisation mit üblicherweise verwendeten Neutralisationsmitteln wie Schwefelsäure, Kohlendioxid, Ammoniumsulfat, -phosphaten oder -carbonat keine störenden Ausfällungen haben, und bei denen Verunreinigungen der technischen Produkte, wie etwa Calciumcarbonat keine störenden Einflüsse haben.

Die Lösung der Aufgabe erfolgt durch ein Verfahren gemäß der Ansprüche 1 bis 6. Die mit dem erfindungsgemäßen Verfahren hergestellten Harze werden insbesondere verwendet als Bindemittel zur Herstellung von Schall- und Wärmedämmstoffen, Holzwerkstoffen, Schäumen und Laminaten gemäß der Ansprüche 7 bis 10.

Es wurde versucht, bei mit Hilfe von Erdalkalihydroxiden kondensierten Phenolharzen die Erdalkaliionen mit Hilfe von Komplexbildnern diese Metallionen so in Lösung zu halten, daß eine gute Lagerstabilität erzielt wird. Dies gelang nicht. Wie ein entsprechendes Vergleichsbeispiel zeigt, bleibt bei Zugabe von üblichen Komplexierungsmitteln zu einer mit Hilfe von Erdalkaliionen hergestellten Harzlösung der gewünschte Effekt der Komplexierung der Metallionen aus.

In EP-A 890 613 wird gelehrt, einem mit Harnstoff modifizierten Phenolharz, das mit Hilfe von Erdalkalihydroxid kondensiert ist, nach der Kondensationsreaktion in einem Arbeitsschritt ein chelatbildendes Mittel und ein polymeres anionisches Dispergiermittel zuzusetzen. Beim Nacharbeiten dieser Lehre (Beispiel 7) wurde allerdings gefunden, daß sich dennoch ein Niederschlag bildet, der abfiltriert werden muß. Außerdem sind die erhaltenen Produkte dunkel gefärbt, was ihren Einsatz überall dort beschränkt, wo ein heller Farbton gewünscht wird, wie z.B. beim Einsatz in der Mineralwollindustrie.

Überraschenderweise aber wurde gefunden, daß sich durch Vermischen der Harzlösung eines mit Hilfe von Erdalkalihydroxid hergestellten Phenolharzes mit einem handelsüblichen Komplexierungsmittel eine Komplexierung der Metallionen erreichen läßt, wenn die Harzlösung bereits mit einem Dispergiermittel intensiv vermischt ist. Dabei liegt das Harz offensichtlich in einer dispergierten Form vor.
Die so entstehende Harzlösung ist stabil. Es fällt kein Niederschlag aus. Auch bei Kontakt mit CO₂ oder gar beim Einleiten von CO₂ in entsprechende Lösungen fällt kein Erdalkalicarbonat aus. Im Gegenteil, in der Harzlösung vorhandene Erdalkalicarbonat-Partikel werden innerhalb kurzer Zeit aufgelöst.

Es ist weiterhin überraschend, daß in den so behandelten Harzen die Metallionen so immobilisiert sind, daß sie für spätere Reaktionen mit Wasser offensichtlich nicht mehr zur Verfügung stehen. Die mit den erfindungsgemäß hergestellten Harzen hergestellten Produkte zeichnen sich durch eine sehr gute Feuchtigkeitsbeständigkeit aus.

Die Durchführung der Kondensationsreaktion aus phenolischen Verbindungen erfolgt in an sich für die Resolherstellung bekannter Weise durch Erhitzen der Reaktionspartner in wäßriger Lösung bis der gewünschte Kondensationsgrad erreicht ist. Als Kondensationspartner können alle für die Herstellung von Phenolharzen bekannten phenolischen Verbindungen und Aldehyde eingesetzt werden.

Phenolische Verbindungen sind insbesondere Phenol aber auch aliphatisch oder aromatisch substituierte Phenole, sowie mehrwertige Phenole. Beispiele hierfür sind Kresole, Xylenole, tert. Octylphenol, Naphthole, p-Phenylphenol, Bisphenole oder Resorcin aber auch Naturstoffe, wie z.B. Cardenol, Cardol oder Tannin. Die phenolischen Verbindungen können als Einzelverbindungen oder im beliebigen Gemisch miteinander eingesetzt werden.

Als Aldehyde sind alle Verbindungen der allgemeinen Formel R-CHO einsetzbar. Beispiele sind Formaldehyd, Acet-, Propion-, n-Butyr- oder Isobutyr-aldehyd, Glyoxal oder Furfural.
Der bevorzugte Aldehyd ist Formaldehyd, der als solcher oder in Form einer Formaldehyd abspaltenden Substanz, wie z.B. Paraformaldehyd oder Trioxan eingesetzt wird. Die bevorzugte Zugabeform ist eine wäßrige Lösung mit einem Formaldehyd-Gehalt von mehr als 30% (Formalin). Das molare Verhältnis der phenolischen Verbindung zu Aldehyd kann im Bereich von 1 : 1,2 bis 1 : 4 beliebig gewählt werden.

Im erfindungsgemäßen Verfahren einsetzbare Katalysatoren sind solche Metall-Salze, die die Bildung von Resolen katalysieren und deren Kationen in technischen Verfahren leicht als schwerlösliche Salze ausgefällt werden können. Beispiele sind Magnesiumoxid, Magnesiumhydroxid, die Hydroxide der Erdalkalimetalle Calcium, Strontium oder Barium oder deren Salze mit schwachen Säuren, aber auch schwach basisch reagierende Salze der Übergangsmetalle wie z.B. Zinkacetat oder Manganoctoat. Der bevorzugte Katalysator ist Calciumhydroxid.
Die Menge des eingesetzten Katalysators liegt im Bereich von 1 bis 15 Gew.%, bevorzugt im Bereich von 2 bis 6 Gew.%, bezogen auf die Menge der eingesetzten phenolischen Verbindung.

Als Dispergiermittel können alle handelsüblichen Substanzen, die als Dispergier-, Emulgier-, Netz- oder Antiabsetzmittel für wäßrige Systeme angeboten werden, eingesetzt werden. Beispiele sind Ammoniumacrylate, Phosphoniumsalze, Polyalkoxy-Verbindungen wie z.B. Alkylarylpolyethylenglykole, Salze von Fettsäuren, insbesondere von Alkylarylcarbonsäuren, Alkylbenzolsulfonate, Alkylnaphthalinsulfonate oder Sulfonate von Kondensationsprodukten von Naphthalin oder Alkylnaphthalin mit Formaldehyd, Alkylsulfate oder Betaine. Bevorzugt verwendet werden Ammoniumpolyacrylate oder Alkylnaphthalinsulfonate.
In einer Menge von 0,05 bis 5 %, bezogen auf die eingesetzte phenolische Verbindung, werden sie dem Reaktionsgemisch aus phenolischen Verbindungen, Aldehyd und Katalysator zugegeben und intensiv vermischt. Dabei kann ihre Zugabe sowohl vor als auch während oder nach der Kondensationsreaktion erfolgen. Im letzteren Fall kann das Dispergiermittel dem Reaktionsgemisch vor der Neutralisation oder danach zugegeben werden. Entscheidend ist in jedem Fall, daß das Harz vor der Zugabe des Chelatisierungsmittels mit Hilfe des zugegebenen Dispergiermittels in einer wie auch immer gearteten dispergierten Form vorliegt. Dazu ist in der Regel ein mehrminütiges, in gängigen, bei der Herstellung der Harze verwendeten Rührreaktoren mindestens 10-minütiges, intensives Vermischen des Reaktionsgemisches mit dem Dispergiermittel erforderlich, bevor das Komplexierungsmittel zugegeben wird.

Als Komplexierungsmittel können alle an sich bekannten wasserlöslichen Verbindungen, die mit Metallionen Chelate bilden, eingesetzt werden. Beispiele sind Ketocarbonsäuren, Dimethylglyoxim, Aminopolycarbonsäuren, Diethylentriaminpentaessigsäure, insbesondere aber Nitrilotriessigsäure (NTA) und Ethylendiamintetraessigsäure (EDTA).
Sie werden bevorzugt in einer Menge eingesetzt, die stöchiometrisch ausreicht, um die Metallionen der eingesetzten Katalysatoren zu komplexieren, wobei bevorzugt ein Überschuß von bis zu 10% gewählt wird, um eine zufriedenstellende Komplexierungsgeschwindigkeit zu erzielen. Ein weiterer Überschuß stört nicht, ist aber aus wirtschaftlichen Gründen nicht angebracht. Aber auch eine gering unterstöchiometrische Zugabe von Komplexierungsmitteln führt zu transparenten Harzlösungen.

Die Zugabe des Komplexierungsmittels erfolgt nach beendeter Kondensationsreaktion und nachdem die frisch hergestellte Harzlösung mit dem Dispergiermittel vermischt ist. Dabei kann das Komplexierungsmittel der Harzlösung ebenfalls sowohl vor als auch nach der Neutralisation des Reaktionsgemisches erfolgen.

Erfolgt die Zugabe des Komplexierungsmittels vor der Neutralisation, so bildet sich auch bei einer Neutralisation mit Säuren, die an sich zu schwerlöslichen Ausfällungen der entsprechenden Metallsalze führen, keine Ausfällungen.
Erfolgt die Zugabe des Komplexierungsmittels nach der Neutralisation mit einer Säure, die bereits zu einer Ausfällung geführt hat, so löst sich diese Ausfällung innerhalb kurzer Zeit auf und es entsteht eine beliebig wasserverdünnbare Harzlösung. Desgleichen lösen sich in der Harzlösung befindliche schwerlösliche Salze, die als Verunreinigungen in den eingesetzten technischen Qualitäten der als Katalysator verwendeten Metallsalze vorhanden sind, nach kurzer Zeit auf.
Diese Harzlösungen sind mehrere Wochen lang lagerstabil ohne daß irgendwelche Ausfällungen von unlöslichen Metallsalzen auftreten. Sie können somit auch nach längeren Lager- und Transportzeiten in gängigen Verfahren, demnach auch in Sprühverfahren verarbeitet werden, ohne daß zu befürchten ist, daß ausgefallene Salze zu Verstopfungen der Düsen führen.

Die Harzlösungen sind transparent und zeigen ein ausgezeichnetes Imprägnierverhalten. Sie lassen sich in der für hergebrachte Resole üblichen Art härten, d.h., sie sind sowohl bei Hitzeeinwirkung selbsthärtend, können aber auch mit an sich bekannten Härtungsmitteln, insbesondere mir Säuren kombiniert eingesetzt werden. Desgleichen können sie, wie dies auch von hergebrachten Resolen bekannt ist, mit anderen, bevorzugt wasserlöslichen, duroplastischen und thermoplastischen Harzen kombiniert werden. Aufgrund dieser Eigenschaften sind sie insbesondere geeignet zur Herstellung von Laminaten und Schäumen.

Die ausgehärteten Harze zeigen ausgezeichnete mechanische Festigkeiten und eine sehr gute Feuchtigkeitsbeständigkeit. Sie eigen sich daher bevorzugt zur Herstellung von Schall- und Wärmedämmstoffen sowie von Holzwerkstoffen.

### Beispiele

Die in den Beispielen angegebenen Mengenanteile sind jeweils Gewichtsteile (GT). Das in den Beispielen 1 und 5 eingesetzte Dispergiermittel ist ein Ammoniumpolyacrylat (Nopcosperse® ). In Beispiel 2 wird als Dispergiermittel Diisobutylnaphthalinsulfonat (Nekal® BX) eingesetzt.

### Beispiel 1

In einem Reaktor werden 100 GT Phenol mit 50 GT Wasser und 4 GT gelöschtem Kalk vermischt und auf 70°C erhitzt. Danach werden 237,5 GT 45%ige Formalinlösung zugegeben und das Reaktionsgemisch bei 70°C kondensiert bis zu einer Wasserverdünnbarkeit von 1 : 10. Dann werden 62,7 GT Harnstoff hinzugegeben und anschließend 0,5 GT Dispergiermittel .
Nach 2-stündigem Rühren und Abkühlen des Reaktionsgemisches werden 1 GT Komplexierungsmittel (Na-Salz der Ethylendiaminteraessigsäure) zugegeben und erneut 15 min gerührt.
Danach wird das Reaktionsgemisch mit verdünnter Schwefelsäure auf pH 7 neutralisiert.
Die Reaktionslösung bleibt klar. Es werden keine Ausfällungen beobachtet.
Auch nach einer Lagerzeit von 4 Wochen bei Raumtemperatur werden keine Ausfällungen beobachtet.

### Beispiel 2

In einem Reaktor werden 100 GT Phenol mit 50 GT Wasser und 5 GT gelöschtem Kalk vermischt und auf 70°C erhitzt. Danach werden 237 GT 45%ige Formalinlösung zugegeben und das Reaktionsgemisch bei 70°C kondensiert bis zu einer Wasserverdünnbarkeit von 1 : 10.
Nach dem Abkühlen auf 23°C werden2 GT einer 50%igen wäßrigen Lösung von Nekal®BX als Dispergiermittel zugegeben und das Gemisch 30 min lang intensiv gerührt. Danach werden 10 GT einer 10%igen wäßrigen Lösung des Na-Salzes der Nitrilotriessigsäure zugegeben und homogenisiert.
Anschließend wird das Reaktionsgemisch mit verdünnter Schwefelsäure auf pH 7 neutralisiert. Die Reaktionslösung bleibt klar. Es werden auch nach 4 Wochen (Lagerung bei Raumtemperatur) keine Ausfällungen beobachtet.

### Beispiel 3 (Vergleichsbeispiel)

Beispiel 1 wird wiederholt, wobei als einzige Änderung keine Zugabe von Dispergiermittel erfolgt.

Bei der Neutralisation des Reaktionsgemisches mit Schwefelsäure fällt Calciumsulfat in Form eines feinkristallinen Niederschlags aus.

### Beispiel 4 (Vergleichsbeispiel)

In einem Reaktor werden analog zu Beispiel 1 bei 70° 100 GT Phenol und 250 GT 45%iges Formalin miteinander kondensiert.
Als Katalysator werden 6,7 GT 50%ige Natronlauge eingesetzt.
Nach der Kondensation werden dem Reaktionsgemisch 15 GT Harnstoff zugegeben und das Gemisch im Anschluß mit verdünnter Schwefelsäure neutralisiert.

### Beispiel 5 (Vergleichsbeispiel)

Analog zu Beispiel 4 werden 100 GT Phenol und 210 GT 45%iges Formalin miteinander kondensiert.
Als Katalysator werden 7,5 GT Triethylamin eingesetzt.
Nach der Kondensation werden dem Reaktionsgemisch 75,8 GT Harnstoff zugegeben und das Gemisch im Anschluß mit verdünnter Schwefelsäure neutralisiert.

### Prüfergebnisse der Harze der Beispiele 1 - 5

Die Harze werden in üblicher Weise analysiert.
Außerdem wird die Biegefestigkeit entsprechender Prüfstäbe bestimmt.
Zur Herstellung der Prüfstäbe werden die Harzlösungen jeweils auf einen Feststoffgehalt von 40% eingestellt.
Je 10 GT dieser Lösungen werden mit jeweils 100 GT Quarzsand vermischt, in Formen (170 x 22 x 22 mm) eingebracht und in diesen Formen 2 h bei 180°C im Ofen gehärtet. Die Biegefestigkeit wird geprüft:
a. im trockenen Zustand
b. in nassem Zustand nach 6 h Lagerung in Wasser bei 100°C und 1 h Abkühlung in fließendem Wasser bei max. 20°C.
Die erhaltenen Ergebnisse finden sich in den folgenden Tabellen 1 und 2:

**Tabelle 1**

| (Analysen) | | | | | |
|---|---|---|---|---|---|
| | Beispiel 1 | Beispiel 2 | Beispiel 3 | Beispiel 4 | Beispiel 5 |
| Brechungsindex | 1,4550 | 1,4742 | | 1,4650 | 1,4540 |
| Feststoff [%] | 45,0 | 45,2 | 43,0 | 49,0 | 47,0 |
| freies Phenol [%] | <0,3 | 0,42 | <0,3 | <0,5 | <0,7 |
| fr.Formalde hyd [%] | <0,5 | 8,2 | <0,5 | 7,0 | <0,5 |
| pH-Wert | 7 | 7 | 7 | 8,8 | 8,6 |
| Wasserlöslichkeit | ∞ | ∞ | ∞ | ∞ | ∞ |
| B-Zeit bei 130°C [min] | 7 | 4 | 13 | 5 | 14 |

**Tabelle 2**

| (Biegefestigkeiten [MPa]) | | |
|---|---|---|
| | trocken | naß |
| Beispiel 1 | 8,1 | 7,9 |
| Beispiel 2 | 8,7 | 8,1 |
| Beispiel 3 | 7,9 | 6,5 |
| Beispiel 4 | 7,5 | 4,1 |
| Beispiel 5 | 7,9 | 5,1 |

### Beispiel 6

Analog zu Beispiel 1 werden 100 GT Phenol mit 142 GT 45%igem Formalin kondensiert.
Als Katalysator werden 5 GT Bariumhydroxid verwendet.
Nach der Kondensation werden 0,5 GT Dispergiermittel zugegeben und das Reaktionsgemisch 2 h gerührt. Danach werden 182 GT Na-Salz der Ethylendiamintetraessigsäure zugegeben und erneut 30 min gerührt.
Anschließend werden 0,5 GT Alkylsulfonsäure, 5 GT Pentan und 5 GT p-Toluolsulfonsäure zugegeben und das Gemisch bei 60°C verschäumt.
Die Druckfestigkeit des Schaums wird nach Chatillon ermittelt. Das Ergebnis findet sich in Tabelle 3.

### Beispiel 7 (Vergleichsbeispiel)

Analog zu Beispiel 6 wird ein Harz hergestellt mit der einzigen Änderung, daß keine Zugabe von Dispergiermittel erfolgt.
Beim Versetzen des zu verschäumenden Gemisches fällt ein unlösliches Bariumsalz der p-Toluolsulfonsäure aus und setzt sich im Reaktionsgemisch langsam ab. Der resultierende Schaum wird dadurch inhomogen.

**Tabelle 3**

| (Druckfestigkeit der Schäume [Pa]) | |
|---|---|
| Beispiel 5 | 70 |
| Beispiel 6 | 56 |

### Beispiel 8 (Vergleichsbeispiel)

In einem Reaktor werden 100 GT Phenol mit 27,3 GT Wasser und 8,8 GT gelöschtem Kalk vermischt und auf 70°C erhitzt. Danach werden 227 GT 45%ige Formalinlösung zugegeben und das Reaktionsgemisch bei 70°C kondensiert bis zu einer Wasserverdünnbarkeit von 1:10. Nach Kühlung auf 60°C werden 32 GT Wasser und 54,7 GT Harnstoff zugegeben. Anschließend wird sofort auf 45°C gekühlt und 30 min bei dieser Temperatur gehalten.
Nach der Kühlung auf 23°C werden kurz hintereinander 0,5% APBT (1% Bayhibit®AM 50%ig) und 0,15% Natrium-Ligninsulfonat (Vanisperse®CB) unter intensivem Rühren zugegeben.

| Analyse des erhaltenen Harzes: | |
|---|---|
| nD-Wert | 1,4635 |
| pH-Wert | 8,8 |
| Dichte bei 20°C | 1,195 g/cm³ |
| freies Formalin | 0,5% |
| freies Phenol | 0,33% |
| Trockenharz | 46,1% |
| Wasserlöslichkeit | unendlich, aber Bildung eines sich absetzenden Niederschlags |
| Farbe | schwarzbraun. |

## Patentansprüche

1. Verfahren zur Herstellung von Resolen durch Umsetzung von phenolischen Verbindungen mit Aldehyden unter katalytischer Wirkung von solchen Metallsalzen, deren Kationen in technischen Verfahren leicht als schwerlösliche Salze ausgefällt werden können, **dadurch gekennzeichnet, daß** dem Reaktionsgemisch aus phenolischer Verbindung, Aldehyd und Metall-Salz, vor, während oder nach der Kondensationsreaktion ein Dispergiermittel zugegeben wird und nach beendeter Kondensationsreaktion und nach dem Zumischen des Dispergiermittels ein Komplexierungsmittel zugemischt wird.

2. Verfahren nach Anspruch 1, **dadurch gekennzeichnet, daß** das Metallsalz Calcium- oder Magnesiumhydroxid ist.

3. Verfahren nach Anspruch 1, **dadurch gekennzeichnet, daß** das Dispergiermittel dem Reaktionsgemisch bereits vor der Kondensationsreaktion zugegeben wird.

4. Verfahren nach Anspruch 1 oder 2, **dadurch gekennzeichnet, daß** das Dispergiermittel dem Reaktionsgemisch nach erfolgter Kondensationsreaktion zugegeben wird und daß das Reaktionsgemisch vor der Zugabe von Dispergiermittel und Komplexierungsmittel neutralisiert wird.

5. Verfahren nach Anspruch 1 oder 2, **dadurch gekennzeichnet, daß** das Dispergiermittel dem Reaktionsgemisch nach erfolgter Kondensationsreaktion zugegeben wird und daß das Reaktionsgemisch nach der Zugabe von Dispergiermittel und Komplexierungsmittel neutralisiert wird.

6. Verfahren nach einem oder mehreren der Ansprüche 1 bis 5, **dadurch gekennzeichnet, daß** die Menge an Dispergiermittel 0,05 - 5%, bezogen auf die eingesetzte phenolische Verbindung, beträgt.

7. Verwendung der gemäß der Ansprüche 1 bis 6 hergestellten Resole zur Herstellung von Schall- und Wärmedämmstoffen.

8. Verwendung der gemäß der Ansprüche 1 bis 6 hergestellten Resole zur Herstellung von Holzwerkstoffen.

9. Verwendung der gemäß der Ansprüche 1 bis 6 hergestellten Resole zur Herstellung von Schäumen.

10. Verwendung der gemäß der Ansprüche 1 bis 6 hergestellten Resole zur Herstellung von Laminaten.

## Claims

1. A process for the preparation of resols by reaction of phenolic compounds with aldehydes under catalytic action of those metal salts of which the cations can be easily precipitated in a technical process, **characterized in that** to the reaction mixture consisting of phenolic compound, aldehyde and metal salt is added a dispering agent prior to, during or after the condensation reaction and that after termination of the condensation reaction and after the admixture of the dispersing agent a complexing agent is admixed.

2. A process of claim 1, **characterized in that** the metal salt is calcium or magnesium hydroxide.

3. A process of claim 1, **characterized in that** the dispersing agent is added to the reaction mixture prior to the condensation reaction.

4. A process of claim 1 or 2, **characterized in that** the dispersing agent is added to the reaction mixture after the condensation reaction is finished and that the reaction mixture is neutralized before the addition of the dispersing agent and of the complexing agent.

5. A process of claim 1 or 2, **characterized in that** the dispersing agent is added to the reaction mixture after the condensation reaction is finished and that the reaction mixture is neutralized after the addition of the dispersing agent and of the complexing agent.

6. A process of one or several of claims 1 to 5, **characterized in that** the amount of dispersing agent is 0.05 to 5 %, related to the phenolic compound used.

7. Use of the resols, prepared according to claims 1 to 6 for the preparation of heat and acoustic insulating products.

8. Use of the resols, prepared according to claims 1 to 6 for the preparation of particle boards.

9. Use of the resols, prepared according to claims 1 to 6 for the preparation of foams.

10. Use of the resols, prepared according to claims 1 to 6 for the preparation of laminates.

## Revendications

1. Procédé pour la fabrication des résols par réaction de composés phénoliques avec des aldéhydes sous influence de tels sel métalliques, les cations desquels peuvent être précipités facilement en un procédé téchnique comme des sels soluble difficilement, **caractérisé en ce que** au mélange réactionel en composé phénolique, aldéhyde et sel métallique sont ajoutés un agent dispersant avant, pendant ou après la réaction de condensation et d'agent complexant après la réaction de condensation est terminée et après l'addition d'agent dispersant.

2. Procédé selon la revendication 1, **caractérisé en ce que** le sel métallique est de hydroxide de calcium ou de magnesium.

3. Procédé selon la revendication 1, **caractérisé en ce que** l'agent dispersant est ajouté au mélange réactionel avant la réaction de condensation.

4. Procédé selon la revendication 1 ou 2, **caractérisé en ce que** l'agent dispersant est ajouté au mélange réactionel après la réaction de condensation et que la mélange réactionel est neutralisée avant l'addition d'agent dispersant et d'agent complexant.

5. Procédé selon la revendication 1 ou 2, **caractérisé en ce que** l'agent dispersant est ajoutée au mélange réactionel après la réaction de condensation et que la mélange réactionel est neutralisée après l'addition d'agent dispersant et d'agent complexant.

6. Procédé selon une ou plusieurs des revendications 1 à 5, **caractérisé en ce que** la quantité d'agent dispersant s'étend de 0,05 à 5% calculés en tant que la composé phénolique utilisée.

7. Utilisation des résols, préparés selon les revendications 1 à 6 pour la fabrication de matériaux d'isolation thermique et acoustique.

8. Utilisation des résols, préparés selon les revendications 1 à 6 pour la fabrication de matériaux de bois.

9. Utilisation des résols, préparés selon les revendications 1 à 6 pour la fabrication de mousses.

10. Utilisation des résols, préparés selon les revendications 1 à 6 pour la fabrication de laminâtes.
